# EUROPEAN PATENT SPECIFICATION

(11) **EP 2 962 832 B1**
(45) Date of publication and mention of the grant of the patent: **23.11.2016**
(21) Application number: 14735694.3
(22) Date of filing: 15.05.2014
(51) Int. Cl.: B29C 49/06, B29C 45/14, B29C 49/08, B29L 31/00, B29C 49/20

(54) **MULTILAYER INJECTION-MOULDING AND BLOW-MOULDING METHOD**
VERFAHREN FÜR MEHRSCHICHTIGES SPRITZGIESSEN UND BLASFORMEN
PROCÉDÉ DE MOULAGE PAR INJECTION SUPERPOSÉE ET INSUFFLATION

(30) Priority: 16.05.2013 PT 10694813
(43) Date of publication of application: 06.01.2016
(73) Proprietor: Moldes RP Industria De Moldes SU, Lda, 2430-402 Marinha Grande (PT)
(72) Inventor: PINHO FERREIRA, Rui Manuel, 2410-475 Leiria (PT); GASPAR CORDEIRO, Hélder Manuel, 2430-520 Marinha Grande (PT)
(74) Representative: Pereira da Cruz, Joao
(86) International application number: PCT/PT2014/000034
(87) International publication number: WO 2014/185807

(56) References cited:
- EP-A1- 0 870 593
- JP-A- S58 194 520
- US-B1- 6 352 426

## Description

### Technical field and scope of the invention

The scope of present invention relates to the field of mechanical engineering applied to the processing of thermoplastic polymer materials. Additionally, in what refers the international patent classification, it belongs to B29C49/06.

The proposed process allows the combination of injection molding superimposed with blowing molding. The injection of superimposed material may occur before, simultaneously, or after the blowing process.

Combining these two processes allows obtaining a piece consisting of one or more thermoplastic raw materials of polymer matrix, taking advantage of each of both processes at the same time.

This process can occur using only a mould, allowing the production of pieces with characteristics of each of the processes in a single molding cycle. It also allows obtaining plastic pieces combining the features of each one of processes, as for example to get cognac balloon glass where the concave profile is obtained from the injection of a preform that is subsequently blown, and in which raw material is simultaneously or subsequently injected in such a way that it will shape the stem and the base of the glass. The raw material used for the second injection may be equal to the raw material used in the first injection, but may also be different providing different color or other physical characteristics to the final product.

### State-of-the art

In a search for the invention state-of-the-art the following documents has been identified as being the closest to the invention prior art: J.P. S58,194,520 A; E.P. 0,870593 A1 and U.S.6,352,426 B1.

### Description of the invention

The present invention relates to the processing of thermoplastic materials by superimposed injection and blowing, applied to a molding machine by thermoplastics injection. This process is applied to an injection machine using an injection system and a gas pressure control, and at least one mould.

The process starts with the injection of the preform (4) which is accomplished from an auxiliary injection unit adjacent to the mould.

The processed material from the auxiliary injection unit flows into the mould through the feed channel of the first injection (2) which is inserted in the cavity plate (1) and in the cavity (3). The geometry of the preform (4) is defined by the cavity (3), plug (6), tubular valve (9) and pin (10).

The injected polymer material is cooled in order to obtain the preform (4) and, if necessary, heating is carried out thereafter for the purpose of blowing. This cooling occurs because the mould is equipped with thermal regulation circuits and electrical resistances for temperature control, allowing the injected material to cool and thereafter, if necessary, to heat it up to the temperature at which the blowing may occur.

After cooling the preform (4), the mould will be opened from the partition line (11). The cavity plate (1) is integral with the fixed plate of the injection machine. The plug plate (5) and the ramp mechanism plate (7) are integral with the moving plate of the injection machine.

Due to its geometry and material shrinkage during cooling, the preform (4) moves jointly with the moving plate of the injection machine.

After opening the mould, the preform (4) is aligned with both the second injection cavity (17) and the moving elements (18 and 24) either by rotating the mould, rotating the moving plate of the injection machine, translating the plugs, or by transferring to a second mould.

Subsequently, the mould is closed and the geometric difference between the components integral with the fixed side, which define the geometry of the piece during the first injection and the components of the fixed side defining the geometry of the piece during the second injection, provides the second injection space (19) and the blowing space (20).

After closing the mould at the second injection cavity (17), the mechanical ramp system (8) is triggered by the actuator (25) which may be a pneumatic or hydraulic cylinder, or a linear motor. The action of this actuator on the ramp mechanism allows moving horizontally the component with which the mechanism is solidary due to the angle of the ramp mechanism (8), thus occurring the upward movement of the tubular valve (9) whose translation opens the gas channel (14) allowing contact between the gas channel (14) and the preform (4). This allows opening a space from the entrance of the gas channel up to the preform (4).

After tubular valve (9) is completely opened, gas coming from an injection and gas pressure control system is injected into the gas channel (14). The tightness of the gas channel is guaranteed by the plug sealing (12) and tubular valve sealing (13). Due to the action of the gas, the available space (20) for the blowing of the preform (4) will be pressurized allowing that blowing of the preform (4) take place constrained by the geometry of the moving parts (18 and 24), this being the process which allows transforming the preform (4) into the blown preform (21).

The gas inside the blowing space (20) is inert and will be vented outside the mould through the partition line (11).

The preform temperature is controlled by thermal regulation circuits and electrical resistances. The blowing pressure is maintained during cooling of the blown preform (21) next to the surfaces of the moving elements (18 and 24). After cooling the preform, the gas in the pressurized gas chamber (22) is decompressed to outside of the mould through the action of an air valve.

The injection of the second component (23) can take place before or after the blowing. Preferably this second injection should occur simultaneously, since it increases the rate of production, representing this step one of the major advantages of present invention as well as its major differentiation from prior art technique.

The second injection is performed through an injection unit which may be the same as the one used in injecting the preform, when the material used for the preform (4) injection is the same as the one used in injecting the second component. If raw materials are different it will be necessary as much injection units as the number of raw materials used.

The material processed in the injection unit flows from this injection unit into the second injection space (19) through the feed channel of the second injection (16). The geometry of the second injected component is bounded by the second injection cavity (19), by the moving elements (18, 24) and by the preform (4). The pressure of the second injection is supported by the preform (4) and the pin (10) which is fixed to the ramp mechanism plate (7) through the bar (15).

Cooling of second component is achieved using refrigeration circuits installed in the mould. After solidification of the injected polymer material to form the second component (23), the mould is opened from the partition line (11).

The extraction of the piece from the plug (6) can be executed using gas injected into the gas channel (14), by means of mechanical components installed in the mould or with the action of a robot external to the mould.

The described example uses as a base the manufacture of a cognac balloon glass, however this process enhances the reduction in the number of components required in certain applications because it allows injection molding being used superimposed to blowing molding. In the case we have of a tank obtained through blowing molding and this one has to be fixed in a given structure, it would be necessary to design a component which allows connection between the structure and the tank. The present invention allows producing a tank obtained through blowing and which simultaneously had a structural basis allowing its connection with other parts without the need of auxiliary components.

### Description of the Figures

### List of reference numbers:

- •: cavity plate (1)
- •: feed channel of the first injection (2)
- •: cavity (3)
- •: preform (4)
- •: plug plate (5)
- •: plug (6)
- •: ramp mechanism plate (7)
- •: mechanical ramp system (8)
- •: tubular valve (9)
- •: pin (10)
- •: partition line (11)
- •: plug sealing (12)
- •: tubular valve sealing (13)
- •: gas channel (14)
- •: bar (15)
- •: feed channel of the second injection (16)
- •: second injection cavity (17)
- •: moving elements (18; 24)
- •: second injection space (19)
- •: blowing space (20)
- •: blown preform (21)
- •: pressurized gas chamber (22)
- •: second component (23)
- •: actuator (25)

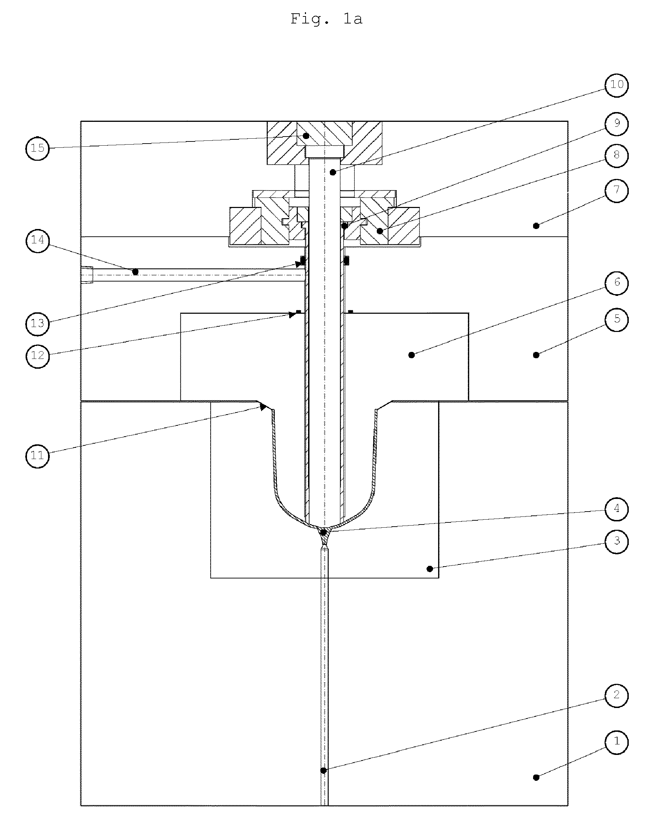

**Fig. 1a** - Cross-sectional representation of a mould at the end of the first injection. The cavity plate (1), plug plate (5) and ramp mechanism plate (7) build the mould structure. In the cavity plate (1) is mounted the cavity (3). The feed channel of the first injection (2) is located inside the cavity plate (1) and cavity (3). The preform (4) is located between the cavity (3) and the plug (6). The plug (6) is mounted on the plug plate (5). The plug sealing (12) is placed between the plug (6) and the plug plate (5). The gas channel (14) is inserted in the plug plate (5), plug (6) and tubular air valve (9). The tightness of the gas channel is guaranteed by the plug sealing (12) and tubular valve sealing (13). The tubular valve is attached to the ramp mechanism (8) which is fixed to the ramp mechanism plate (7). The pin (10) is mounted on the ramp mechanism plate (7) being fixed by the bar (15). The mould opening occurs from the partition line (11).

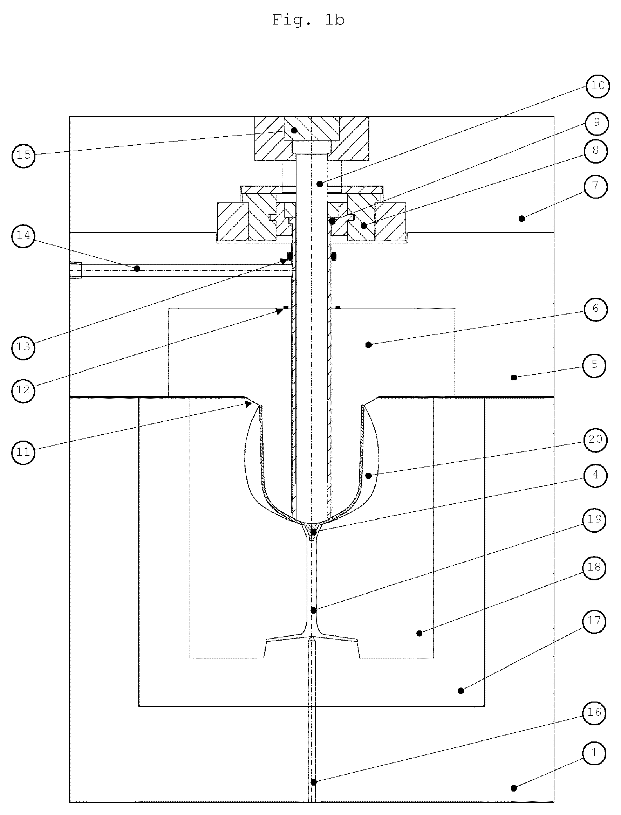

**Fig. 1b** - Cross-sectional representation of a mould at the end of placing the components in the preform, which will provide the space for blowing and second injection. The cavity plate (1), plug plate (5) and ramp mechanism plate (7) build the mould structure. The cavity (17) and the moving element (18) are mounted in the cavity plate (1). The feed channel of the second injection (16) is located inside the cavity plate (1) and cavity (17). The second injection space (19) is bounded by the cavity (17), moving element (18) and preform (4). The blowing space (20) is formed between the moving element (18) and the preform (4) which will later allow preform expansion. The plug (6) is mounted on the plug plate (5). The plug sealing (12) is placed between the plug (6) and the plug plate (5). The gas channel (14) is inserted in the plug plate (5), plug (6) and tubular air valve (9). The tightness of the gas channel is guaranteed by the plug sealing (12) and tubular valve sealing (13). The tubular valve is attached to the ramp mechanism (8) which is fixed to the ramp mechanism plate (7). The pin (10) is mounted on the ramp mechanism plate (7) being fixed by the bar (15). The mould opening occurs from the partition line (11).

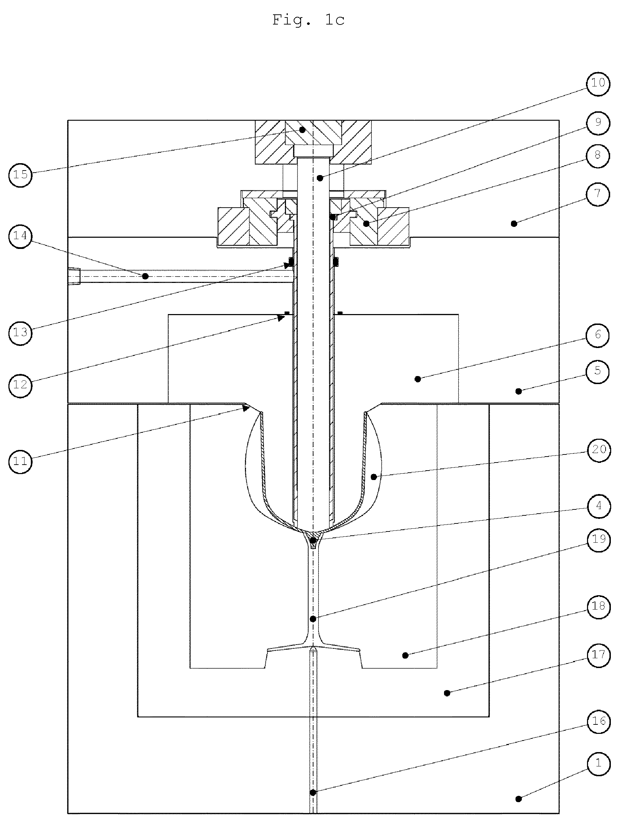

**Fig. 1c** - Cross-sectional representation of a mould at the end of opening the tubular valve (9). The cavity plate (1), plug plate (5) and ramp mechanism plate (7) build the mould structure. The cavity (17) and the moving element (18) are mounted in the cavity plate (1). The feed channel of the second injection (16) is located inside the cavity plate (1) and cavity (17). The second injection space (19) is bounded by the cavity (17), moving element (18) and preform (4). The blowing space (20) is formed between the moving element (18) and the preform (4) which will later allow preform expansion. The plug (6) is mounted on the plug plate (5). The plug sealing (12) is placed between the plug (6) and the plug plate (5). The gas channel (14) is inserted in the plug plate (5), plug (6) and tubular air valve (9). The tightness of the gas channel is guaranteed by the plug sealing (12) and tubular valve sealing (13). The tubular valve is attached to the ramp mechanism (8) which is fixed to the ramp mechanism plate (7). The pin (10) is mounted on the ramp mechanism plate (7) being fixed by the bar (15). The mould opening occurs from the partition line (11).

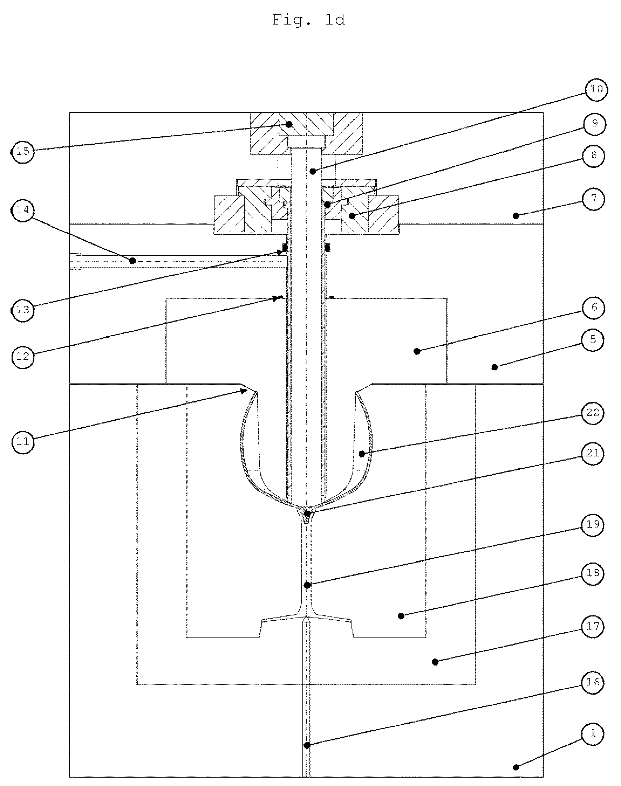

**Fig. 1d** - Cross-sectional representation of a mould at the end of blowing. The cavity plate (1), plug plate (5) and ramp mechanism plate (7) build the mould structure. The cavity (17) and the moving element (18) are mounted in the cavity plate (1). The feed channel of the second injection (16) is located inside the cavity plate (1) and cavity (17). The second injection space (19) is bounded by the cavity (17), moving element (18) and blown preform (21). The blowing gas chamber (22) is located between the plug (6) and the blown preform (21). The plug (6) is mounted on the plug plate (5). The plug sealing (12) is placed between the plug (6) and the plug plate (5). The gas channel (14) is inserted in the plug plate (5), plug (6) and tubular air valve (9). The tightness of the gas channel is guaranteed by the plug sealing (12) and tubular valve sealing (13). The tubular valve is attached to the ramp mechanism (8) which is fixed to the ramp mechanism plate (7). The pin (10) is mounted on the ramp mechanism plate (7) being fixed by the bar (15). The mould opening occurs from the partition line (11).

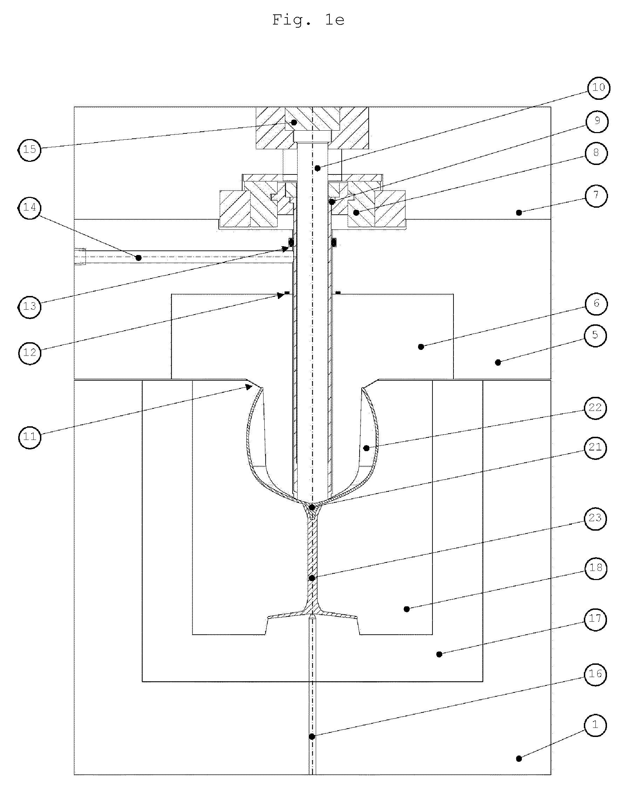

**Fig. 1e** - Cross-sectional representation of a mould at the end of second injection. The cavity plate (1), plug plate (5) and ramp mechanism plate (7) build the mould structure. The cavity (17) and the moving element (18) are mounted in the cavity plate (1). The feed channel of the second injection (16) is located inside the cavity plate (1) and cavity (17). The space for the second component (23) is bounded by the cavity (17), moving element (18) and preform (4). The blowing gas chamber (22) is located between the plug (6) and the blown preform (21). The plug (6) is mounted on the plug plate (5). The plug sealing (12) is placed between the plug (6) and the plug plate (5). The gas channel (14) is inserted in the plug plate (5), plug (6) and tubular air valve (9). The tightness of the gas channel is guaranteed by the plug sealing (12) and tubular valve sealing (13). The tubular valve is attached to the ramp mechanism (8) which is fixed to the ramp mechanism plate (7). The pin (10) is mounted on the ramp mechanism plate (7) being fixed by the bar (15). The mould opening occurs from the partition line (11).

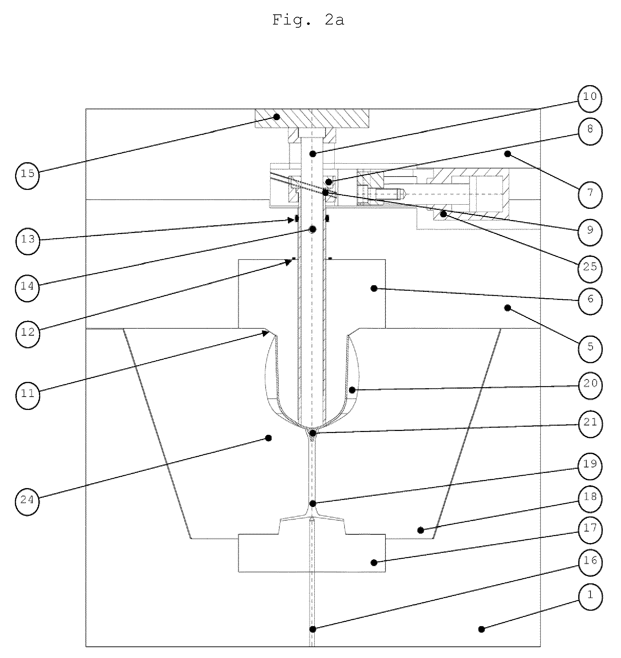

**Fig. 2a** **-** Longitudinal-sectional representation of a mould at the end of placing the preform in the components which will provide the blowing space (20) and the second injection space (19). The cavity plate (1), plug plate (5) and ramp mechanism plate (7) build the mould structure. The cavity (17) and the moving elements (18) (24) are mounted in the cavity plate (1). The feed channel of the second injection (16) is located inside the cavity plate (1) and cavity (17). The second injection space (19) is bounded by the cavity (17), moving elements (18) (24) and preform (4). The blowing space (20) is located between the moving elements (18) (24) and the preform (4) which will later allow preform (4) expansion. The plug (6) is mounted on the plug plate (5). The plug sealing (12) is placed between the plug (6) and the plug plate (5). The gas channel (14) is inserted in the plug plate (5), plug (6) and tubular air valve (9). The tightness of the gas channel is guaranteed by the plug sealing (12) and tubular valve sealing (13). The tubular valve is attached to the ramp mechanism (8) which is fixed to the ramp mechanism plate (7) to be triggered by the actuator (25). The pin (10) is mounted on the ramp mechanism plate (7) being fixed by the bar (15). The mould opening occurs from the partition line (11).

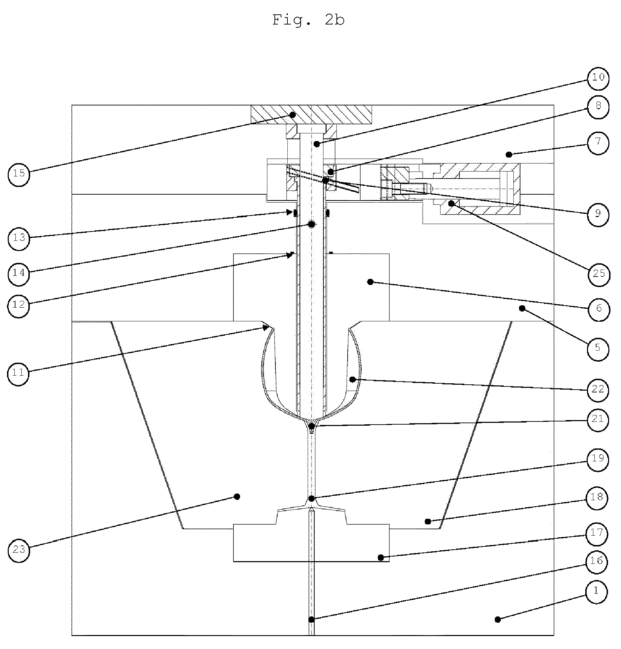

**Fig. 2b** **-** Longitudinal-sectional representation of a mould at the end of blowing. The cavity plate (1), plug plate (5) and ramp mechanism plate (7) build the mould structure. The cavity (17) and the moving element (18) are mounted in the cavity plate (1). The feed channel of the second injection (16) is located inside the he cavity plate (1) and cavity (17). The second injection space (19) is bounded by the cavity (17), moving elements (18) (24) and blown preform (21). The blowing gas chamber (22) is located between the plug (6) and the blown preform (21). The plug (6) is mounted on the plug plate (5). The plug sealing (12) is placed between the plug (6) and the plug plate (5). The gas channel (14) is inserted in the plug plate (5), plug (6) and tubular air valve (9). The tightness of the gas channel is guaranteed by the plug sealing (12) and the tubular valve sealing (13). The tubular valve is attached to the ramp mechanism (8) which is fixed to the ramp mechanism plate (7) to be triggered by the actuator (25). The pin (10) is mounted on the ramp mechanism plate (7) being fixed by the bar (15). The mould opening occurs from the partition line (11).

## Claims

1. Molding process by superimposed injection and blowing comprising the following steps:
a. injection of the preform (4) from an auxiliary injection unit adjacent to the mould and moving the processed material from the auxiliary injection unit into the mould through the feed channel of the first injection (2), which is inserted in the cavity plate (1) and in the cavity (3);
b. cooling the injected material and opening the mould from the partition line (11);
c. aligning the preform (4) on the second injection cavity (17) and moving elements (18 and 24);
d. closing the mould in the second injection cavity (17) and triggering the mechanical ramp system (8) from the actuator (25);
e. upward movement of the tubular valve (9), opening the gas channel (14) and establishing contact between the gas channel (14) and the preform (4);
f. gas injection from a gas injection system into the gas channel (14) and control of the gas pressure;
g. blowing the preform (4);
h. cooling the blown preform (21) near the surfaces of the moving elements (18, 24) where the blowing pressure is maintained;
i. decompression of the gas existing in the pressurized gas chamber (22) to outside of the mould acting on an air valve;
j. cooling the second component;
k. opening the mould from the partition line (11) and extracting the piece from the plug (6); and
**characterized in that**:
- blowing the preform (4) of step g. and simultaneously injecting the second component (23), through an injection unit displacing the material processed in the injection unit into the second injection space (19) through the feed channel of the second injection (16), further transforming the preform (4) into the blown preform (21);
- cooling of the second component of step j. using refrigeration circuits installed in the mold, and solidification of the injected material to form the second component (23);
- the injection unit of the second component (23) is the same as the injection unit of the preform when the material used for the preform (4) injection is the same as the one used for the second component injection.

2. Process according to claim 1, **characterized in that** the preform (4) is heated with the purpose of blowing after cooling the material injected in the first injection.

3. Process according to claim 1, **characterized in that** the alignment of the preform (4) is achieved either by rotating the mould, by rotating the moving plate of the injection machine, by translating the plugs, or by transferring to a second mould, resulting in an alignment with the second injection cavity (17) and with the moving elements (18 and 24).

4. Process according to claim 1, **characterized in that** the injection of the second component (23) can be take place before or after the blowing.

5. Process according to claim 1, **characterized in that** as many injection units as the number of raw materials used are required when the material used for the preform (4) injection is different from the one used for the second component injection.

6. Process according to claim 1, **characterized in that** extracting the piece from the plug (6) can be performed using gas injected into the gas channel (14), by means of mechanical components installed in the mould, or with the action of a robot external to the mould.

## Patentansprüche

1. Gussverfahren durch Einspritzen und Blasformen, welches folgende Schritte umfasst:
a. Einspritzen der Vorform (4) durch eine der Form angrenzende Spritzeinheit und Verlegung des verarbeiteten Materials, von der angrenzenden Spritzeinheit in die Form durch den Förderkanal der ersten Spritze (2), welches in die Formplatte (1) und den Hohlraum (3) eingefügt wird;
b. Abkühlen des eingespritzten Materials und Öffnen der Form an der Trennlinie (11);
c. Ausrichtung der Vorform (4) an den zweiten Spritzenhohlraum (17) und den beweglichen Elementen (18 und 24);
d. Schließung der Form im zweiten Spritzenhohlraum (17) und Auslösung des mechanischen Rampensystems (8) durch den Stellantrieb (25);
e. Aufwärtsbewegung des Rohrventils (9), Öffnen des Gaskanals (14) und Kontaktknüpfung zwischen dem Gaskanal (14) und der Vorform (4);
f. Gasinjektion durch ein Gasinjektionsystem in das Gaskanal (14) und Regelung des Gasdrucks;
g. Blasen der Vorform (4);
h. Abkühlen der geblasten Vorform (21) nahe den Oberflächen der beweglichen Elemente (18, 24), an denen der Blasdruck erhalten bleibt;
i. Dekompression des Gases nach außen der Form, welches in der Druckgas Kammer (22) existiert, durch ein Luftventil;
j. Abkühlen der zweiten Komponente;
k. Öffnen der Form an der Trennlinie (11) und Entnehmen des Teils aus dem Stecker (6); und
**dadurch gekennzeichnet, dass**:
- Blasen der Vorform (4) in Schritt g. und gleichzeitig die zweite Komponente (23) bespritzen, durch eine Spritzeinheit, welche das Material aus der Spritzeinheit in den zweiten Einspritzungsraum (19) durch den Förderkanal der zweiten Spritze (16) drängt, und auf diese Weise die Vorform (4) in die geblasene Vorform (21) gewandelt wird;
- Abkühlung der zweiten Komponente in Schritt j., indem ein Kühlkreislauf verwendet wird, der in der Form installiert ist, und Verfestigung des eingespritzen Materials, um so die zweite Komponente (23) zu formen;
- die Spritzeinheit der zweiten Komponente (23) ist dieselbe Spritzeinheit der Vorform, wenn das Material für das Spritzen der Vorform (4) dasselbe für das Spritzen der zweite Komponente ist.

2. Verfahren nach Anspruch 1, **dadurch gekennzeichnet, dass** die Vorform (4) mit dem Zweck erhizt wird, das Material, welches in die erste Spritze gespritzt wird, nach dem Kühlen zu blasen.

3. Verfahren nach Anspruch 1, **dadurch gekennzeichnet, dass** die Ausrichtung der Vorform (4) erreicht wird, indem die Form entweder gedreht wird, die bewegliche Platte der Injektionsmaschine gedreht wird, die Stecker übertragen werden, oder indem in eine zweite Form transferiert wird, wodurch eine Ausrichtung am zweiten Spritzenhohlraum (17) und mit den beweglichen Elementen (18 und 24) geschaffen wird.

4. Verfahren nach Anspruch 1, **dadurch gekennzeichnet, dass** das Spritzen der zweiten Komponente (23), vor oder nach dem Blasen, erfolgen kann.

5. Verfahren nach Anspruch 1, **dadurch gekennzeichnet, dass** so viele Spritzeinheiten, wie die Anzahl der Rohmaterialien benötigt werden, wenn das verwendete Material für das Spritzen der Vorform (4) ein anderes ist, als das, welches für das Spritzen der zweiten Komponente verwendet wird.

6. Verfahren nach Anspruch 1, **dadurch gekennzeichnet, dass** das Entnehmen des Teils aus dem Stecker (6) erfolgen kann, indem Gas in den Gaskanal (14) injeziert wird, oder durch installierte mechanische Komponente in der Form, oder wiederum durch die Handlung eines Roboters außerhalb der Form erfolgt.

## Revendications

1. Procédé de moulage par injection superposée et insufflation comprenant les étapes suivantes :
a. injection de la préforme (4) à partir d'une unité auxiliaire d'injection adjacente au moule et déplacement du matériau traité de l'unité auxiliaire d'injection au moule à travers le canal d'alimentation de la première injection (2), qui se trouve dans la plaque de la cavité (1) et dans la cavité (3) ;
b. refroidissement du matériau injecté et ouverture du moule à partir de la ligne de séparation (11) ;
c. alignement de la préforme (4) sur la cavité de la seconde injection (17) et les éléments mobiles (18 et 24) ;
d. fermeture du moule dans la cavité de la seconde injection (17) et actionnement du système mécanique en rampe (8) à partir de l'actionneur (25) ;
e. mouvement ascendant de la soupape tubulaire (9), ouverture du canal de gaz (14) et contact entre le canal de gaz (14) et la préforme (4) ;
f. injection de gaz provenant d'un système d'injection de gaz dans le canal de gaz (14) et contrôle de la pression du gaz ;
g. insufflation de la préforme (4) ;
h. refroidissement de la préforme insufflée (21) près des surfaces des éléments mobiles (18, 24), où la pression d'insufflation est maintenue ;
i. décompression du gaz existant dans la chambre à gaz sous pression (22) vers l'extérieur du moule, par l'action d'une soupape à air ;
j. refroidissement du deuxième composant ;
k. ouverture du moule à partir de la ligne de séparation (11) et extraction de la pièce du bouchon (6) ; et
**caractérisé par** :
- insufflation de la préforme (4) de l'étape g. et injection simultanée du second composant (23), à travers une unité d'injection, et déplacement du matériau traité dans l'unité d'injection vers l'espace de la seconde injection (19) à travers le canal d'alimentation de la seconde injection (16), avec la transformation ultérieure de la préforme (4) en la préforme insufflée (21) ;
- refroidissement du second composant de l'étape j. à partir de circuits de réfrigération installés dans le moule et solidification du matériau injecté pour former le second composant (23) ;
- l'unité d'injection du second composant (23) est la même que l'unité d'injection de la préforme, quand le matériau utilisé pour l'injection de la préforme (4) est le même qui celui utilisé pour l'injection du second composant.

2. Procédé selon la revendication 1, **caractérisé en ce que** la préforme (4) est chauffée afin d'être insufflée après le refroidissement du matériau injecté lors de la première injection.

3. Procédé selon la revendication 1, **caractérisé en ce que** l'alignement de la préforme (4) est réalisé par rotation du moule, par rotation de l'assiette mobile de la machine d'injection, par translation des bouchons ou par transfert à un second moule, résultant dans un alignement avec la cavité de la seconde injection (17) et avec les éléments mobiles (18 et 24).

4. Procédé selon la revendication 1, **caractérisé en ce que** l'injection du second composant (23) peut être réalisée avant ou après l'insufflation.

5. Procédé selon la revendication 1, **caractérisé en ce que** sont nécessaires autant d'unités d'injection que du nombre de matières premières, quand le matériau utilisé pour l'injection de la préforme (4) est différent de celui utilisé pour l'injection du second composant.

6. Procédé selon la revendication 1, **caractérisé en ce que** l'extraction de la pièce du bouchon (6) peut être réalisée en utilisant du gaz injecté dans le canal de gaz (14), au moyen de composants mécaniques installés dans le moule ou par l'action d'un robot extérieur au moule.
